# EUROPÄISCHE PATENTSCHRIFT

(11) **EP 1 337 585 B1**
(45) Veröffentlichungstag und Bekanntmachung des Hinweises auf die Patenterteilung: **16.11.2005**
(21) Anmeldenummer: 01978192.1
(22) Anmeldetag: 28.09.2001
(51) Int. Cl.: C08L 63/00, H01B 3/40

(54) **SILIKONMODIFIZIERTE EINKOMPONENTENVERGUSSMASSE**
SILICONE-MODIFIED SINGLE-COMPONENT SEALING COMPOUND
MASSE DE SCELLEMENT A UNE COMPOSANTE MODIFIEE A LA SILICONE

(30) Priorität: 14.10.2000 DE 10051051
(43) Veröffentlichungstag der Anmeldung: 27.08.2003
(73) Patentinhaber: ROBERT BOSCH GMBH, 70442 Stuttgart (DE)
(72) Erfinder: JENNRICH, Irene, 71364 Winnenden (DE); LEO, Kristian, 71576 Burgstetten (DE); MUZIC, Markus, 71711 Murr (DE); ENDRES, Wolfgang, 73630 Remshalden (DE); GREIF, Hubert, 71706 Markgroeningen (DE)
(86) Internationale Anmeldenummer: PCT/DE2001/003742
(87) Internationale Veröffentlichungsnummer: WO 2002/032997

(56) Entgegenhaltungen:
- DE-A- 19 523 897
- DE-A- 19 638 630
- US-A- 4 853 434
- US-A- 5 248 710

## Beschreibung

### Stand der Technik

Die Erfindung bezieht sich auf eine Vergußmasse nach Anspruch 1 und deren Verwendung sowie auf ein Verfahren zur Herstellung von Formteilen.

Vergußmassen auf der Basis eines durch eine chemische Reaktion aushärtenden Harzes spielen bei der Herstellung technischer Bauteile und Komponenten eine große Rolle. Sie werden dabei unter anderem zu Isolierzwecken bei elektrischen oder elektronischen Bauteilen eingesetzt. Üblicherweise sind derartige Vergußmassen als Zweikomponentensysteme ausgeführt, wobei die eine Komponente ein Härter ist, der mit der anderen Komponente, die Reaktionsharze, Füllstoffe etc. enthält, gemischt und sofort verarbeitet wird. Dies ist nachteilig, da die Bereitstellung der Vergußmasse in den Verarbeitungsprozeß integriert werden muß und eine Lagerung für beispielsweise 3 bis 12 Monate in einsatzfähigem Zustand bei Raumtemperatur nicht möglich ist. Ein weiterer Nachteil besteht in der nur unter großem technischem Aufwand zu gewährleistenden Arbeitssicherheit im Umgang mit der härtenden Komponente, da als Härter oft gesundheitsschädliche oder reizende Verbindungen wie Carbonsäureanhydride oder Amine eingesetzt werden. Aus diesem Grund wurden Einkomponentensysteme entwickelt.

So sind aus der DE 196 38 630 A1 derartige Vergußmaterialen zur Unterfüllung elektronischer und elektrischer Bauelemente bekannt, die dem Schutz vor Umwelteinflüssen und zur Stabilisierung von Lötverbindungen der Bauelemente dienen. Die Aushärtung der dort beschriebenen Einkompontensysteme erfolgt thermisch und/oder durch Einwirkung von UV-Strahlung.

Der vorliegenden Erfindung liegt die Aufgabe zugrunde, eine Vergußmasse bereitzustellen, die als Einkomponentensystem lagerbeständig und verarbeitbar ist, die eine hohe Wärmeleitfähigkeit und Rißbeständigkeit aufweist, elektrisch isolierend wirkt und gegenüber aggressiven Medien, wie beispielsweise Kraftstoffen, auch bei hohen Temperaturen resistent ist.

### Vorteile der Erfindung

Die der Erfindung zugrundeliegende Aufgabe wird erfindungsgemäß durch die Bereitstellung einer als Einkomponentensystem verarbeitbaren Vergußmasse gemäß Definition in Anspruch 1 gelöst, die eine silikonhaltige Komponente enthält. Diese Vergußmasse weist eine niedrige Viskosität und eine gute Kapillarwirkung während der Verarbeitung auf, sie zeichnet sich durch eine hohe Wärmeleitfähigkeit und Rißbeständigkeit aus und haftet auf verschiedensten Materialien. Darüber hinaus ist sie thermisch hoch belastbar und auch bei hohen Temperaturen beständig gegenüber einer Einwirkung von Kraftstoffen.

Mit den in den Unteransprüchen aufgeführten Maßnahmen sind vorteilhafte Weiterbildungen der erfindungsgemäßen Vergußmasse möglich.

So weist die Vergußmasse eine kurze Aushärtungszeit und ein günstiges Reaktionsprofil auf und ist demzufolge gut zu verarbeiten. Dies wird durch die Wahl eines geeigneten Initiators bewirkt, der einen kationischen Vernetzer und einen Cokatalysator umfaßt.

In einer besonders vorteilhaften Ausführung weist die Vergußmasse einen Anteil von bis zu 90 Gew.% einer silikonhaltigen Komponente auf, die als Silikon Silikonelastomerpartikel enthält. Dies gewährleistet eine hohe mechanische Belastbarkeit im ausgehärteten Zustand, ohne daß die Viskosität der Vergußmasse bei der Verarbeitung unerwünscht ansteigt.

### Ausführungsbeispiele

Vergußmassen gemäß der vorliegenden Erfindung weisen vier Grundkomponenten auf, nämlich eine Epoxidharzkomponente A, eine silikonhaltige Komponente B, einen Füllstoff C und einen Initiator D. Darüber hinaus sind weitere Komponenten vorgesehen, die üblicherweise bei gattungsgemäßen Vergußmassen Anwendung finden, wie beispielsweise Entschäumer, Sedimentationshemmer und Haftvermittler, deren Verwendung dem Fachmann geläufig ist.

Allgemein ist zu beachten, daß Vergußmassen vor und während der Verarbeitung ein stabiles System bilden müssen, um eine Entmischung der Komponenten zu verhindern. So sollten die Füllstoffpartikel eine stabile Dispersion mit den Epoxidharzkomponenten bilden und die Epoxidharzkomponenten wiederum stabile Emulsionen untereinander. Diese Stabilität muß sowohl während der Verarbeitung als auch bei der Aushärtung einer Vergußmasse gewährleistet sein.

Als Epoxidharzkomponente A kann grundsätzlich ein Vielzahl monomerer, eine Epoxidfunktion aufweisender Verbindungen, allein oder in Mischungen mit anderen Verbindungen mit oder ohne Epoxidfunktion verwendet werden. Besonders vorteilhaft ist jedoch die Verwendung von Di- und/oder Triepoxiden, wobei die im folgenden aufgeführten, kommerziell erhältlichen Verbindungen exemplarisch aufgeführt sind:

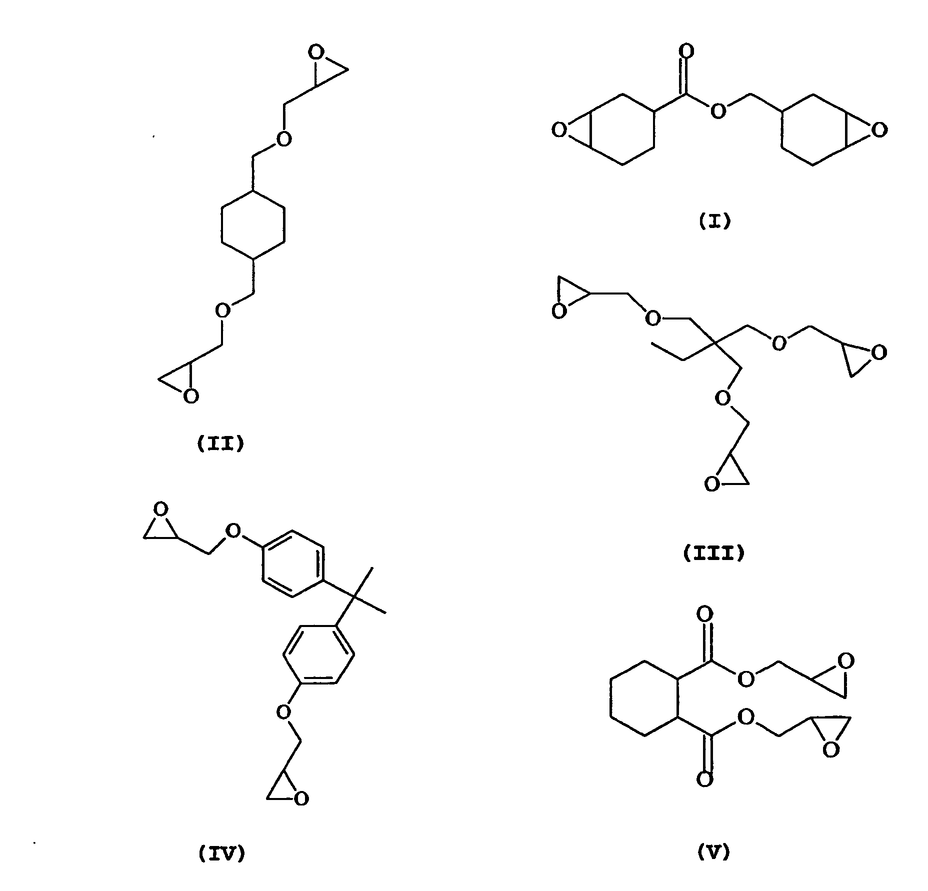

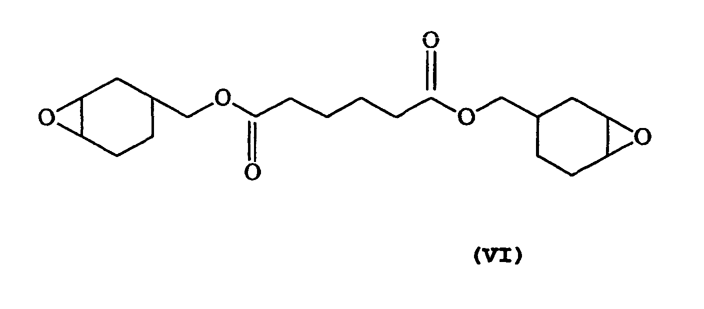

Die Epoxidharzkomponente A kann eine oder mehrere der Verbindungen (I) bis (VI) umfassen sowie weitere Komponenten. Als besonders geeignet haben sich ringepoxidierte cycloaliphatische Diepoxide, wie beispielsweise (I) und (VI), erwiesen. Die Epoxidharzkomponente A ist in der Vergußmasse zu 5 bis 90 Gew.%, bevorzugterweise zu 10 bis 60 Gew.% enthalten.

Die in der Vergußmasse darüber hinaus enthaltene silikonhaltige Komponente B stellt eine Dispersion eines oder mehrerer Silikone in einem Epoxidharz dar. Als Silikone kommen sowohl Silikonblockcopolymere als auch Silikonpartikel in Betracht. Die bevorzugt verwendeten Silikonpartikel können Silikonharzpartikel oder auch Silikonelastomerpartikel sein, es ist jedoch von Vorteil, wenn diese einen Teilchendurchmesser von 10 nm bis 100 µm aufweisen. Die Silikonpartikel können grundsätzlich mit einer chemisch modifizierten Oberfläche als sogenannte Core-Shell-Partikel eingesetzt werden; es hat sich jedoch gezeigt, daß unbehandelte bzw. oberflächenmodifizierte, wie beispielsweise mit PMMA behandelte Silikonpartikel für die der Erfindung zugrundeliegende Aufgabenstellung besser geeignet sind. Als Epoxidharz können grundsätzlich alle monomeren, eine Epoxidfunktion aufweisenden Verbindungen allein oder in Mischungen mit anderen Verbindungen mit und ohne Epoxidfunktion verwendet werden. Besonders vorteilhaft ist jedoch die Verwendung einer oder mehrerer der oben genannten Diepoxide (I) bis (VI). Die silikonhaltige Komponente B enthält zu 10 bis 80 Gew.% Silikon, bevorzugt ist ein Anteil von 40 Gew.%. Die Vergußmasse enthält bis zu 90 Gew.% der silikonhaltigen Komponente B.

Die Vergußmasse enthält weiterhin einen oder mehrere Füllstoffe C, durch deren geeignete Wahl ein Schwund der Vergußmasse während der Verarbeitung verhindert werden kann und die Wärmeleitfähigkeit der Vergußmasse im ausgehärteten Zustand einstellbar ist. So eignen sich beispielsweise Quarzmehl, Aluminiumoxid, Kreide, Quarzgut oder Talkum gegebenenfalls in Mischungen mit Sisliciumcarbid als Füllstoff C. Als besonders geeignet hat sich die Verwendung von silanisiertem Quarzmehl erwiesen, wobei die Silanisierung entweder in situ durch Zugabe eines Silans oder schon im Vorfeld durch Silanisierung des Quarzmehls erfolgen kann. Der Füllstoff C ist in der Vergußmasse zu 5 bis 75 Gew.% enthalten, bevorzugt ist ein Anteil von 40 bis 60 Gew.%.

Als vierte Komponente D enthält die Vergußmasse einen Initiator, der eine ausreichend rasche Reaktion bei höherer Temperatur ermöglicht. Als Initiator kommen sowohl thermische als auch Photoinitiatoren in Frage.

Um zu gewährleisten, daß die Vergußmasse als Einkomponentensystem verarbeitbar ist, wurde als Initiator ein kationischer Vernetzer gewählt. Dieser kann beispielsweise eine Chinolinium-, Sulfonium- Iodonium- oder Bor-Iodoniumverbindung sein. Diese führen zu einer kationischen Polymerisation des Epoxidharzes.

Der Initiator enthält darüber hinaus auch einen Cokatalysator, der vor allem der Senkung der Starttemperatur der Reaktion dient. Dieser ist ein Radikalbildner wie beispielsweise Benzopinakol sein. Die Wahl des Initiators bestimmt im wesentlichen den Reaktionsverlauf der Aushärtung. Die Kombination eines kationischen Vernetzers mit einem Cokatalysator führt zu einem geeigneten Reaktionsgeschwindigkeitsprofil, das durch eine eng einzugrenzende optimale Reaktionstemperatur gekennzeichnet ist, bei der die Reaktion zügig fortschreitet, ohne daß bereits bei tieferen Temperaturen wie beispielsweise Raumtemperatur eine schleppende Reaktion einsetzt. Dies ist darüber hinaus eine Voraussetzung für die Lagerfähigkeit des Einkomponentensystems bei Raumtemperatur.

Die Verarbeitung der Vergußmasse zu einem Formteil erfolgt bei höherer Temperatur. Die Vergußmasse weist bei entsprechender Erwärmung eine so geringe Viskosität und eine so hohe Kapillarwirkung auf, daß auch ungünstige Geometrien wie Gießspalte mit einem Durchmesser von < 200 µm beim Verguß ausgegossen werden können. Dies ermöglicht gleichzeitig sehr kurze Taktzeiten. Die vergossene Vergußmasse wird einer Temperatur von 60 bis 110 °C für 30 bis 300 Minuten oder von 120°C für 10 bis 100 Minuten ausgesetzt, um ein Gelieren der Vergußmasse zu erreichen. Danach wird sie für 10 bis 90 Minuten einer Temperatur von 140 bis 220°C zur Aushärtung des Formteils ausgesetzt. Die Verarbeitungszeit liegt somit bei deutlich weniger als 50% der normalerweise beim Verguß einer Zweikomponentenmasse anzusetzenden Zeit.

Es besteht auch die Möglichkeit, die Prozeßschritte des Gelierens und Aushärtens in einem Verfahrensschritt zusammenzufassen, indem die Vergußmasse nach dem Vergießen sofort einer Temperatur von 140 bis 220°C ausgesetzt wird.

Exemplarisch werden im folgenden Ausführungsbeispiele von Vergußmassen bzw. ihrer Zusammensetzungen und resultierenden Eigenschaften im gehärteten Zustand dargestellt.

### Zusammensetzungen:

| Ausführungsbeispiel | 1 | 2 | 3 | 4 |
|---|---|---|---|---|
| Epoxidharzkomponente A | 88 | 75 | 62 | 52 |
| Silikonhaltige Komponente B | 12 | 25 | 38 | 48 |
| Füllstoff C | 100 | 100 | 100 | 100 |
| Entschäumer auf Silikonbasis | 0.075 | 0.075 | 0.075 | 0.075 |
| Sedimentationshemmer | 0.2 | 0.2 | 0.2 | 0.2 |

Die Zusammensetzungen sind in Gewichtsteilen angegeben, der Initiator wird jeweils in sehr geringen Konzentrationen von 0.1 bis 5 Gew.% zugesetzt. Die obengenannten Zusammensetzungen ergeben folgendes Eigenschaftsprofil:
- Viskosität bei 60 °C: 100 bis 1000 mPas

Nach der Härtung:
- Linearer Schwund: 0.4 bis 0.7%
- Glasübergangstemperatur: 150 bis 165 °C
- Thermischer Ausdehnungskoeffizient: 30 bis 50*10⁻⁶ 1/°C
- Double Torsion Test: K_{1c} 0.8 bis 1.15 MPa√m
   G_{1c} 100 bis 236 J/m²
- Wärmeleitfähigkeit: 0.5 bis 0.7 W/m*K
- Gewichtsänderung in Dieselkraftstoff nach 300h bei 200°C: 0 bis 1.7%
- Volumenänderung in Dieselkraftstoff nach 300h bei 200°C: 0 bis 3.7%
- Änderung der Biegefestigkeit in Dieselkraftstoff nach 300h bei 200°C: 7.5 bis 26%
- Änderung der Randfaserdehnung in Dieselkraftstoff nach 300h bei 200°C: 7.5 bis 35%

Die Vergußmasse eignet sich beispielsweise zur elektrischen Isolation, mechanischen Fixierung und als Schutz vor aggressiven Medien von elektrischen Wicklungen elektromagnetischer Aktoren. Derartige Aktoren können beispielsweise in Magnetventile integriert sein, speziell in Diesel- oder Benzinmagnetventile.

Die Erfindung ist nicht auf die beschriebenen Ausführungsbeispiele beschränkt, sondern es sind neben den beschriebenen Anwendungsfeldern auch weitere denkbar, wie beispielsweise der Einsatz der Vergußmasse bei der Herstellung von Sensoren, insbesondere für den Motorraum von Kraftfahrzeugen, und von Getrieben und Kraftstoffbehältern, insbesondere für Kraftfahrzeuge.

## Patentansprüche

1. Vergussmasse auf der Basis eines durch eine chemische Reaktion härtenden Harzes, insbesondere zur Isolation elektrischer Komponenten, die eine Epoxidharzkomponente (A), eine silikonhaltige Komponente (B), einen Füllstoff (C) und einen Initiator (D) aufweist und als Einkomponentensystem verarbeitbar ist, **dadurch gekennzeichnet, dass** der Initiator einen Cokatalysator umfasst und dass der Cokatalysator ein Radikalbildner ist.

2. Vergußmasse nach Anspruch 1, **dadurch gekennzeichnet, daß** die Epoxidharzkomponente (A) ein Epoxidharz auf der Basis eines Di- oder Triepoxids ist.

3. Vergußmasse nach Anspruch 1 oder 2, **dadurch gekennzeichnet, daß** die Epoxidharzkomponente (A) ein Epoxidharz auf der Basis eines cycloaliphatischen Diepoxids ist.

4. Vergußmasse nach einem der vorhergehenden Ansprüche, **dadurch gekennzeichnet, daß** die Epoxidharzkomponente (A) in der Vergußmasse zu 5 bis 90 Gew.% enthalten ist.

5. Vergußmasse nach einem der vorhergehenden Ansprüche, **dadurch gekennzeichnet, daß** die silikonhaltige Komponente (B) eine Dispersion eines Silikons in einem auf einem Diepoxid basierenden Epoxidharz ist.

6. Vergußmasse nach einem der vorhergehenden Ansprüche, **dadurch gekennzeichnet, daß** die Vergußmasse bis zu 90 Gew.% der silikonhaltigen Komponente (B) enthält.

7. Vergußmasse nach Anspruch 5 oder 6, **dadurch gekennzeichnet, daß** die silikonhaltige Komponente (B) 10 bis 80 Gew.% eines Silikons enthält.

8. Vergußmasse nach einem der Ansprüche 5 bis 7, **dadurch gekennzeichnet, daß** die silikonhaltige Komponente (B) als Silikon Silikonelastomerpartikel beinhaltet.

9. Vergußmasse nach Anspruch 8, **dadurch gekennzeichnet, daß** die Silikonelastomerpartikel einen Teilchendurchmesser von 10 nm bis 100 µm aufweisen.

10. Vergußmasse nach einem der vorhergehenden Ansprüche, **dadurch gekennzeichnet, daß** der Füllstoff (C) Quarzmehl, insbesondere silanisiertes Quarzmehl, Aluminiumoxid und/oder Talkum ist.

11. Vergußmasse nach einem der vorhergehenden Ansprüche, **dadurch gekennzeichnet, daß** die Vergußmasse 5 bis 75 Gew.%, bevorzugterweise zu 40 bis 60 Gew.% Füllstoff enthält.

12. Vergußmasse nach einem der vorhergehenden Ansprüche, **dadurch gekennzeichnet, daß** der Initiator einen kationischen Vernetzer umfaßt.

13. Vergußmasse nach Anspruch 12, **dadurch gekennzeichnet, daß** der kationische Vernetzer eine Bor-Iodonium und/oder Chinoliniumverbindung ist.

14. Vergußmasse nach Anspruch 1, **dadurch gekennzeichnet, daß** der Cokatalysator ein Benzopinakol ist.

15. Vergußmasse nach einem der vorhergehenden Ansprüche, **dadurch gekennzeichnet, daß** die Vergußmasse anhydridfrei ist.

16. Verfahren zur Herstellung eines Formteils, insbesondere zur Isolation elektrischer Komponenten, mittels einer Vergußmasse nach Anspruch 1 bis 15, **dadurch gekennzeichnet, daß** die Vergußmasse als Einkomponentensystem in einem ersten Arbeitsschritt in eine Vergußform eingebracht wird, in einem zweiten Arbeitsschritt zur Bildung eines Gels einer ersten erhöhten Temperatur ausgesetzt wird und in einem dritten Arbeitsschritt zur Härtung des Formteils einer zweiten erhöhten Temperatur ausgesetzt wird.

17. Verfahren nach Anspruch 16, **dadurch gekennzeichnet, daß** die Vergußmasse im zweiten Arbeitsschritt zur Bildung eines Gels 30 bis 300 Minuten einer Temperatur von 60 bis 110°C bzw. 10 bis 100 Minuten einer Temperatur von 100 bis 140°C ausgesetzt wird.

18. Verfahren nach Anspruch 16 oder 17, **dadurch gekennzeichnet, daß** die Vergußmasse im dritten Arbeitsschritt zur Härtung des Formteils 10 bis 90 Minuten einer Temperatur von 140 bis 220°C ausgesetzt wird.

19. Verwendung einer Vergußmasse nach einem der Ansprüche 1 bis 15 zur Herstellung elektromagnetischer Aktoren.

20. Verwendung einer Vergußmasse nach einem der Ansprüche 1 bis 15 zur Herstellung von Magnetventilen, insbesondere von Diesel- und Benzinmagnetventilen.

21. Verwendung einer Vergußmasse nach einem der Ansprüche 1 bis 15 zur Herstellung von Sensoren, inbesondere für den Motorraum von Kraftfahrzeugen.

22. Verwendung einer Vergußmasse nach einem der Ansprüche 1 bis 15 zur Herstellung von Getrieben, insbesondere für Kraftfahrzeuge.

23. Verwendung einer Vergußmasse nach einem der Ansprüche 1 bis 15 zur Herstellung von Kraftstoffbehältern, insbesondere für Kraftfahrzeuge.

## Claims

1. Potting compound based on a resin which cures by a chemical reaction, in particular for insulation of electric components, comprising an epoxy resin component (A), a silicone-containing component (B), a filler (C), and an initiator (D), and being processible as a single-component system, **characterized in that** the initiator includes a cocatalyst and **in that** the cocatalyst is a radical former.

2. Potting compound according to Claim 1, **characterized in that** the epoxy resin component (A) is an epoxy resin based on a diepoxy or triepoxy.

3. Potting compound according to Claim 1 or 2, **characterized in that** the epoxy resin component (A) is an epoxy resin based on a cycloaliphatic diepoxy.

4. Potting compound according to one of the preceding claims, **characterized in that** the epoxy resin component (A) is present in the potting compound in the amount of 5 to 90 wt %.

5. Potting compound according to one of the preceding claims, **characterized in that** the silicone-containing component (B) is a dispersion of a silicone in an epoxy resin based on a diepoxy.

6. Potting compound according to one of the preceding claims, **characterized in that** the potting compound contains the silicone-containing component (B) in the amount of up to 90 wt %.

7. Potting compound according to Claim 5 or 6, **characterized in that** the silicone-containing component (B) contains 10 to 80 wt % of a silicone.

8. Potting compound according to one of Claims 5 to 7, **characterized in that** the silicone-containing component (B) contains silicone elastomer particles as the silicone.

9. Potting compound according to Claim 8, **characterized in that** the silicone elastomer particles have a particle diameter of 10 nm to 100 µm.

10. Potting compound according to one of the preceding claims, **characterized in that** the filler (C) is powdered quartz, in particular silanized quartz powder, aluminium oxide, and/or talc.

11. Potting compound according to one of the preceding claims, **characterized in that** the potting compound contains 5 to 75 wt % filler, preferably 40 to 60 wt % filler.

12. Potting compound according to one of the preceding claims, **characterized in that** the initiator includes a cationic crosslinking agent.

13. Potting compound according to Claim 12, **characterized in that** the cationic crosslinking agent is a boroiodonium and/or quinolinium compound.

14. Potting compound according to Claim 1, **characterized in that** the cocatalyst is a benzopinacol.

15. Potting compound according to one of the preceding claims, **characterized in that** the potting compound is free of anhydride.

16. Method of manufacturing a moulded part, in particular for insulation of electric components, using a potting compound according to Claims 1 to 15, **characterized in that** the potting compound is introduced as a single-component system into a potting mould in a first step, exposed to a first elevated temperature in a second step to form a gel, and exposed to a second elevated temperature in a third step to cure the moulded part.

17. Method according to Claim 16, **characterized in that** in the second step for forming a gel, the potting compound is exposed to a temperature of 60 to 110°C for 30 to 300 minutes or to a temperature of 100 to 140°C for 10 to 100 minutes.

18. Method according to Claim 16 or 17, **characterized in that** in the third step to cure the moulded part the potting compound is exposed to a temperature of 140 to 220°C for 10 to 90 minutes.

19. Use of a potting compound accoarding to one of Claims 1 to 15 to manufacture electromagnetic actuators.

20. Use of a potting compound according to one of Claims 1 to 15 to manufacture solenoid valves, in particular diesel and gasoline solenoid valves.

21. Use of a potting compound according to one of Claims 1 to 15 to manufacture sensors, in particular for the engine compartment of motor vehicles.

22. Use of a potting compound according to one of Claims 1 to 15 to manufacture transmissions, in particular for motor vehicles.

23. Use of a potting compound according to one of Claims 1 to 15 to manufacture fuel tanks, in particular for motor vehicles.

## Revendications

1. Masse de scellement à base d'une résine durcissable par réaction chimique notamment pour isoler les composants électriques ayant un composant de résine époxyde (A), un composant contenant du silicone (B) et une charge (C) ainsi qu'un initiateur (D) et se traitant comme un système à un composant,
**caractérisée en ce que**
l'initiateur comprend un co-catalyseur et celui-ci forme des radicaux.

2. Masse de scellement selon la revendication 1,
**caractérisée en ce que**
le composant de résine époxyde (A) est une résine époxyde à base d'un di- ou triépoxyde.

3. Masse de scellement selon l'une quelconque des revendications 1 ou 2,
**caractérisée en ce que**
le composant de résine époxyde (A) est une résine époxyde à base d'un diépoxyde cycloaliphatique.

4. Masse de scellement selon l'une quelconque des revendications précédentes,
**caractérisée en ce que**
le composant de résine époxyde (A) contenu dans la masse de scellement représente entre 5 et 90 % en poids.

5. Masse de scellement selon l'une quelconque des revendications précédentes,
**caractérisée en ce que**
le composant contenant du silicone (B) est une dispersion d'un silicone dans une résine époxyde à base de diépoxyde.

6. Masse de scellement selon l'une quelconque des revendications précédentes,
**caractérisée en ce que**
la masse de scellement contient jusqu'à 90 % en poids du composant contenant du silicone (B).

7. Masse de scellement selon l'une quelconque des revendications 5 ou 6,
**caractérisée en ce que**
le composant (B) contenant du silicone contient entre 10 et 80 % en poids de silicone.

8. Masse de scellement selon l'une quelconque des revendications 5 à 7,
**caractérisée en ce que**
le composant (B) contenant du silicone contient comme silicone des particules d'un élastomère siliconé.

9. Masse de scellement selon la revendication 8,
**caractérisée en ce que**
les particules d'élastomère siliconé ont un diamètre de particules compris entre 10 nm et 100 µm.

10. Masse de scellement selon l'une quelconque des revendications précédentes,
**caractérisée en ce que**
la charge (C) est une farine de quartz, notamment silanisée, de l'oxyde d'aluminium et/ou du talc.

11. Masse de scellement selon l'une quelconque des revendications précédentes,
**caractérisée en ce que**
la masse de scellement contient entre 5 et 75 % en poids de préférence entre 40 et 60 % en poids de charge.

12. Masse de scellement selon l'une quelconque des revendications précédentes,
**caractérisée en ce que**
l'initiateur est un agent de réticulation cationique.

13. Masse de scellement selon la revendication 12,
**caractérisée en ce que**
l'agent de réticulation cationique est une liaison bore-iodoniseur et/ou chinolinium.

14. Masse de scellement selon la revendication 1,
**caractérisée en ce que**
le co-catalyseur est du benzopinacol.

15. Masse de scellement selon l'une quelconque des revendications précédentes,
**caractérisée en ce que**
la masse coulée est sans anhydride.

16. Procédé de fabrication d'une pièce moulée notamment pour l'isolation de composants électriques à l'aide d'une masse de scellement selon les revendications 1 à 15,
**caractérisé en ce qu'**
on place la masse de scellement comme composant unique dans un moule de coulée au cours d'une première opération, et dans une seconde opération on forme un gel exposé à une première température élevée et dans une troisième étape de fonctionnement, pour durcir la pièce moulée, on l'expose à une seconde température plus élevée.

17. Procédé de fabrication selon la revendication 16,
**caractérisé en ce que**
dans la seconde phase de travail, pour former un gel, on expose la masse coulée pendant 30 à 300 minutes à une température de 60 à 110°C ou pendant 10-100 minutes à une température de 100-140°C.

18. Procédé selon l'une quelconque des revendications 16 ou 17,
**caractérisé en ce qu'**
on expose la masse de scellement dans une troisième opération pour durcir les pièces moulées, pendant 10 à 90 minutes à une température de 140-220°C.

19. Application d'une masse de scellement selon l'une quelconque des revendications 1 à 15, pour fabriquer des actionneurs électromagnétiques.

20. Application d'une masse de coulée selon l'une quelconque des revendications 1 à 15, pour fabriquer des électrovannes en particulier des soupapes électromagnétiques de moteur Diesel et d'essence.

21. Application d'une masse coulée selon l'une quelconque des revendications 1 à 5, pour la fabrication de capteurs notamment de capteurs destinés à être intégrés dans l'habitacle du moteur de véhicules automobiles.

22. Application d'une masse de scellement selon l'une quelconque des revendications 1 à 15, pour fabriquer des boîtes de vitesses notamment pour des véhicules automobiles.

23. Application d'une masse de coulée selon l'une quelconque des revendications 1 à 15, pour fabriquer des réservoirs de carburant notamment pour les véhicules automobiles.
